# EUROPÄISCHE PATENTSCHRIFT

(11) **EP 0 790 426 B1**
(45) Veröffentlichungstag und Bekanntmachung des Hinweises auf die Patenterteilung: **10.03.1999**
(21) Anmeldenummer: 97890006.6
(22) Anmeldetag: 14.01.1997
(51) Int. Cl.: F16D 13/64, F16D 69/04

(54) **Verfahren zum Herstellen einer ebenen Reiblamelle**
Method for manufacturing a flat friction disc
Procédé de fabrication d'une lamelle de friction plane

(30) Priorität: 14.02.1996 AT 255/96
(43) Veröffentlichungstag der Anmeldung: 20.08.1997
(73) Patentinhaber: Miba Frictec GmbH & Co. KG., 4663 Laakirchen (AT)
(72) Erfinder: Kremsmair, Christian, Ing., 4655 Vorchdorf (AT); Hartner, Johann, 4663 Laakirchen (AT); Bürtlmair, Bruno, 4820 Vöcklamarkt (AT); Lassl, Klaus-Peter, 4655 Vorchdorf (AT); Hartner, Gerhard, Ing., 4654 Bad Wimsbach-Neydharting (AT)
(74) Vertreter: Hübscher, Heiner, Dipl.-Ing.

(56) Entgegenhaltungen:
- EP-A- 0 370 476
- DE-B- 1 575 906

## Beschreibung

Die Erfindung bezieht sich auf ein Verfahren zum Herstellen einer ebenen Reiblamelle, wobei zunächst ein Sinterreibbelag auf eine ebene Stahl lamelle aufgebracht und dann gesintert wird, bevor der gesinterte Reibbelag unter gleichzeitigem Einpressen von Rillen verdichtet und kalibriert wird.

Ein derartiges Verfahren ist z.B. aus DE-B-15 75 906 bekannt.

Zur Herstellung von Reiblamellen mit einem Sinterreibbelag werden in üblicher Weise die den Reibbelag aufnehmenden Stahlträger zunächst entfettet und dann dosiert mit einem pulverförmigen Bindemittel und dem Reibbelagpulver bestreut, bevor der auf die Stahl lamelle aufgebrachte Reibbelag beispielsweise in einem Bandofen unter einer reduzierenden Gasatmosphäre gesintert wird. Für den Fall, daß die Reiblamelle auf beiden Seiten einen Reibbelag aufweisen soll, ist nach dem Aufsintern des Reibbelages auf der einen Seite die Stahllamelle in gleicher Art auf der anderen Seite mit einem Streusinterreibbelag zu versehen. Nach dem Sintervorgang werden die gesinterten Reibbeläge durch ein Kaltpressen verdichtet, wobei zugleich die für den Ölablauf erforderlichen Rillen in den Reibbelag eingepreßt werden. Trotz dieses Preßvorganges, bei dem die Reiblamelle plangedrückt wird, können die bei der Wärmebehandlung während des Sintervorganges auftretenden Verformungen der Stahl lamelle nicht ausgeglichen werden, so daß eine weitere Wärmebehandlung unter Druckanwendung in einem Haubenofen vorgenommen wird, bevor die Reiblamellen durch ein abschließendes Kaltpressen auf das Endmaß kalibriert werden. Der zusätzliche, mit einer Wärme- und Druckbehandlung verbundene Richtvorgang, der für das Sicherstellen einer auch höheren Anforderungen entsprechenden Planheit der Reiblamellen erforderlich ist, macht allerdings das beschriebene Herstellungsverfahren aufwendig.

Der Erfindung liegt somit die Aufgabe zugrunde ein Verfahren der eingangs geschilderten Art so auszubilden, daß auf den zusätzlichen Richtvorgang durch eine nachträgliche Wärme- und Druckbehandlung der gesinterten Reiblamelle verzichtet werden kann, ohne Einbußen hinsichtlich der Planheit und der Genauigkeit der Reiblamellen in Kauf nehmen zu müssen.

Die Erfindung löst die gestellte Aufgabe dadurch, daß beim Kalibrieren der Reiblamelle in die Stahllamelle über deren Fläche verteilt örtlich begrenzte Vertiefungen durch den Sinterreibbelag eingedrückt werden.

Die beim Eindrücken der Vertiefungen erfolgende Kaltverformung der Stahllamelle bringt aufgrund der damit verbundenen Verfestigung eine ausreichende Formstabilität für die Reiblamelle mit sich, um die beim kalibrierungsbedingten Plandrücken erzielte Planheit der Reiblamelle weitgehend beizubehalten. Es muß lediglich für eine entsprechende Verteilung der Vertiefungen über die Fläche der Stahllamelle gesorgt werden. Wegen der örtlichen Begrenzung der Vertiefungen bleibt die Wirkung des Sinterreibbelages von den durch den Sinterreibbelag in die Stahl lamelle eingedrückten Vertiefungen unberührt. Es muß lediglich darauf geachtet werden, daß die Vertiefungen, die durch den Sinterreibbelag in die Stahllamelle eingedrückt werden, ohne den Sinterreibbelag zu lochen, nicht die Haftung zwischen dem Reibbelag und der Stahllamelle örtlich beeinträchtigen und zum Ausgangspunkt einer Belagsablösung werden. Aus diesem Grunde empfiehlt es sich, daß die Vertiefungen im Bereich des Sinterreibbelages ausschließlich durch den Rillengrund durchgedrückt und im Bereich des Reibbelages zwischen den Rillen keine Vertiefungen vorgesehen werden. Im übrigen vergrößern die zusätzlichen Vertiefungen das Rillenvolumen der Reibfläche, was einen günstigen Einfluß insbesondere auf die Wärmebelastbarkeit der Reiblamelle hat.

Besonders vorteilhafte Verhältnisse können dann erreicht werden, wenn die Vertiefungen gleichzeitig mit dem Einpressen der Rillen in den Sinterreibbelag in die Stahllamelle eingedrückt werden. Mit dieser Maßnahme wird nicht nur ein gesonderter Arbeitsgang für das Eindrücken der Vertiefungen in die Stahllamelle überflüssig, sondern auch die Maßhaltigkeit des Reibbelages selbst verbessert. Beim Einpressen der Rillen in den Sinterreibbelag wird zugleich der übrige Reibbelag verdichtet. Da sich das Preßwerkzeug in diesem Fall mit den vorragenden Ansätzen zum Eindrücken der Vertiefungen an der Stahllamelle selbst abstützt, ergibt sich eine feste Zuordnung zwischen der Stahl lamelle und dem Preßwerkzeug, was sonst bei Reiblamellen mit beidseitigen Reibbelägen nicht gegeben ist. Es kann daher die Reibbelagdicke und damit die Belagsporosität sehr genau eingestellt werden.

Um eine möglichst gleichmäßige Verfestigung der Stahllamelle trotz der örtlich begrenzten Vertiefungen zu erreichen, empfiehlt es sich, die Vertiefungen von beiden Seiten in die Stahl lamelle einzudrücken, selbst wenn die Stahllamelle nur auf einer Seite einen gesinterten Reibbelag aufweist. Die Vertiefungen brauchen dabei keineswegs einander gegenüberliegen, sondern können bezüglich der Vertiefungen auf der jeweilig anderen Seite versetzt sein. Die Eindringtiefe ist von den jeweiligen Verhältnissen abhängig, soll aber im allgemeinen höchstens ein Drittel der Dicke der Stahllamellen ausmachen. Die Form der Vertiefungen kann unterschiedlich gewählt werden. Es ist allerdings darauf zu achten, daß der beim Eindrücken der Vertiefungen auftretende seitliche Materialfluß möglichst nicht behindert wird. Werden kegel- oder pyramidenförmige Vertiefungen in die Stahllamelle eingedrückt, so wird diesen Anforderungen vorteilhaft Rechnung getragen. Ob anstelle der kegel- oder pyramidenförmigen Vertiefungen solche auf der Basis von Kegel- oder Pyramidenstümpfen treten, spielt eine untergeordnete Rolle, weil ja die Spitzen und Kanten ohnehin abgerundet werden.

Anhand der Zeichnung wird das erfindungsgemäße Verfahren näher erläutert. Es zeigen
- Fig. 1: eine herzustellende Reiblamelle ausschnittsweise in einer vereinfachten Draufsicht,
- Fig. 2: eine Draufsicht auf einen gemäß dem erfindungsgemäßen Verfahren hergestellten Sinterreibbelag in einem vergrößerten Maßstab,
- Fig. 3: einen Schnitt nach der Linie III-III der Fig. 2 in einem größeren Maßstab und
- Fig. 4: ausschnittsweise ein zum Herstellen eines Reibbelages gemäß der Fig. 3 einsetzbares Preßwerkzeug.

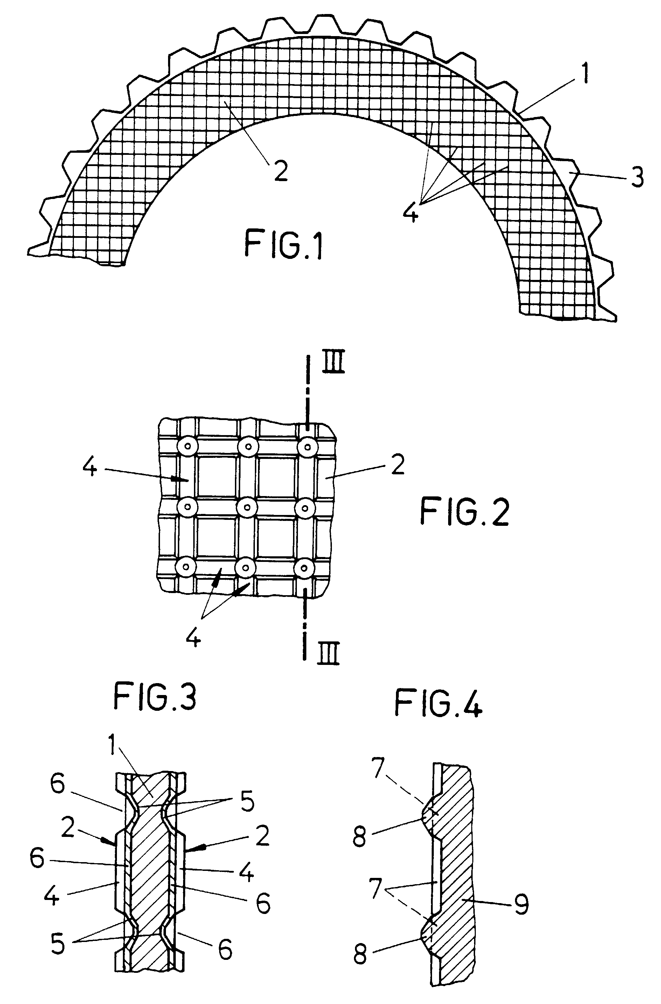

Die Reiblamelle gemäß dem Ausführungsbeispiel 1 besteht aus einer Stahllamelle 1 als Träger für einen Sinterreibbelag 2, der beidseitig auf die ringförmige Stahllamelle 1 aufgebracht ist, allerdings unter Freilassung einer Umfangsverzahnung 3. Das Aufstreuen des Sinterreibpulvers zunächst auf der einen Seite der entfetteten Stahllamelle 1 erfolgt in herkömmlicher Weise unter Abdeckung der Umfangsverzahnung 3, wie auch die nachfolgende Sinterung in einem Bandofen unter einer reduzierenden Gasatmosphäre üblich ist. Das Auftragen des Reibbelages auf der gegenüberliegenden Seite der Stahllamelle 1 erfolgt in analoger Art. Die so beidseitig mit Sinterreibbelägen 2 versehene Stahllamelle 1 wird dann einem Preß- und Kalibriervorgang unterworfen, bei dem nicht nur der Reibbelag in bekannter Weise verdichtet und mit Rillen 4 für den Ölablauf versehen, sondern auch die Stahllamelle 1 einer Kaltverformung unterworfen wird, und zwar durch das Eindrücken von örtlich begrenzten Vertiefungen 5 durch den Rillengrund 6 hindurch, wie dies der Fig. 3 besonders deutlich entnommen werden kann. Diese Vertiefungen entstehen gemäß der Fig. 4 durch über die Stege 7 zum Einprägen der Rillen 4 vorragende, beispielsweise kegelförmige Ansätze 8 des Preßwerkzeuges 9, wenn die Reiblamelle zwischen zwei solchen Preßwerkzeugen eingespannt wird. Während der Reibbelag 2 im Bereich der Stege 7 lediglich stärker als im übrigen Bereich verdichtet wird, ohne die Stahllamelle 1 zu verformen, wird die Stahllamelle 1 im Bereich der Ansätze 8 durch den Rillengrund 6 mit Vertiefungen 5 versehen, die im Umgebungsbereich dieser Vertiefungen 5 eine Kaltverformung der Stahllamelle 1 und damit eine entsprechende Kaltverfestigung bewirken, so daß die bei diesem Preßvorgang erzielte Kalibrierung einschließlich der Planheit der Stahl lamelle auch nach dem Druckabbau weitgehend erhalten bleibt. Mit dem Preßvorgang für die Belagsverdichtung und das Einpressen der Rillen 4 können somit bereits die Endmaße der Reiblamelle in einem engen Toleranzbereich erstellt werden. Da sich die beidseitigen Preßwerkzeuge 9 über die Ansätze 8 an der Stahllamelle 1 selbst abstützen - der in diesem Bereich stark verdichtete, durch den Reibbelag gebildete Rillengrund 6 kann in diesem Zusammenhang vernachläßigt werden -, wird außerdem eine hohe Maßhaltigkeit für die beidseitigen Sinterreibbeläge 2 selbst erreicht, was sich vorteilhaft auf das Einhalten einer bestimmten Porosität des Reibbelages 2 und damit auf seine Reibeigenschaften auswirkt.

## Patentansprüche

1. Verfahren zum Herstellen einer ebenen Reiblamelle, wobei zunächst ein Sinterreibbelag auf eine ebene Stahllamelle (1) aufgebracht und dann gesintert wird, bevor der gesinterte Reibbelag (2) unter gleichzeitigem Einpressen von Rillen (4) verdichtet und kalibriert wird, dadurch gekennzeichnet, daß beim Kalibrieren der Reiblamelle in die Stahllamelle (1) über deren Fläche verteilt örtlich begrenzte Vertiefungen (5) durch den Sinterreibbelag (2) eingedrückt werden.

2. Verfahren nach Anspruch 1, dadurch gekennzeichnet, daß die Vertiefungen (5) im Bereich des Sinterreibbelages (2) ausschließlich durch den Rillengrund (6) durchgedrückt werden.

3. Verfahren nach Anspruch 1 oder 2, dadurch gekennzeichnet, daß die Vertiefungen (5) gleichzeitig mit dem Einpressen der Rillen (4) in den Sinterreibbelag (2) in die Stahllamelle (1) eingedrückt werden.

4. Verfahren nach einem der Ansprüche 1 bis 3, dadurch gekennzeichnet, daß die Vertiefungen (5) von beiden Seiten in die Stahllamelle (1) eingedrückt werden.

5. Verfahren nach einem der Ansprüche 1 bis 4, dadurch gekennzeichnet daß die Vertiefungen (5) höchstens bis zu einem Drittel der Dicke der Stahllamelle (1) in diese eingedrückt werden.

6. Verfahren nach einem der Ansprüche 1 bis 5, dadurch gekennzeichnet, daß kegel- oder pyramidenförmige Vertiefungen (5) in die Stahllamelle (1) eingedrückt werden.

## Claims

1. A method of making a flat friction disc, wherein a sintered friction lining is first applied to a flat steel disc (1) and then sintered before the sintered friction lining (2) is compacted and calibrated with the simultaneous impression of grooves (4), characterised in that during calibration of the friction disc locally limited depressions (5) are pressed through the sintered friction lining (2) into the steel disc (1) so as to be distributed over the surface thereof.

2. A method according to Claim 1, characterised in that the depressions (5) are pressed solely through the groove base (6) in the region of the sintered friction lining (2).

3. A method according to Claim 1 or 2, characterised in that the depressions (5) are pressed into the steel disc (1) simultaneously with the impression of the grooves (9) in the sintered friction lining (2).

4. A method according to any one of Claims 1 to 3, characterised in that the depressions (5) are pressed into the steel disc (1) from both sides.

5. A method according to any one of Claims 1 to 4, characterised in that the depressions (5) are pressed into the steel disc (1) to a maximum of one-third of the thickness of the steel disc.

6. A method according to any one of Claims 1 to 5, characterised in that conical or pyramidal depressions (5) are pressed into the steel disc (1).

## Revendications

1. Procédé de fabrication d'une lamelle de frottement plane, où d'abord on applique un revêtement de frottement à fritter sur une lamelle en acier (1) plane, puis l'on fritte, avant que le revêtement de frottement (2) ayant été fritté soit comprimé avec emboutissage simultané de cannelures (4) et calibré, caractérisé par le fait que, lors du calibrage de la lamelle de frottement dans la lamelle en acier (1), sont emboutis à travers la garniture de frottement à fritter (2) des creusements (5) délimités localement, répartis sur sa surface.

2. Procédé selon la revendication 1, caractérisé par le fait que les creusements (5) sont pressés à travers le fond de cannelure (6) exclusivement dans la zone du revêtement de frottement à fritter (2).

3. Procédé selon la revendication 1 ou 2, caractérisé par le fait que les creusements (5) sont emboutis simultanément à l'emboutissage des cannelures (9) dans le revêtement de frottement à fritter (2) dans la lamelle en acier (1).

4. Procédé selon l'une des revendications 1 à 3, caractérisé par le fait que les creusements (5) sont emboutis depuis les deux faces dans la lamelle en acier (1).

5. Procédé selon l'une des revendications 1 à 4, caractérisé par le fait que les creusements (5) sont emboutis au maximum jusqu'à un tiers de l'épaisseur de la lamelle en acier (1), dans celle-ci.

6. Procédé selon l'une des revendications 1 à 5, caractérisé par le fait que des creusements (5) en forme de cône ou de pyramide sont emboutis dans la lamelle en acier (1).
